# EUROPEAN PATENT APPLICATION

(11) **EP 4 404 410 A1**
(43) Date of publication of application: **24.07.2024**
(21) Application number: 23275014.1
(22) Date of filing: 23.01.2023
(51) Int. Cl.: H02J 3/00, H02J 3/36, H02M 1/32

(54) **ELECTRICAL DISCHARGE SYSTEM AND METHOD**

(71) Applicant: General Electric Technology GmbH, 5400 Baden (CH)
(72) Inventor: OCHOA JIMENEZ,, Ismael, Stafford (GB)
(74) Representative: Openshaw & Co.

(57) **Abstract**

An electrical discharge system (4) for discharging a plurality of power transmission media (2) of a power transmission network, the electrical discharge system (4) comprising:
a discharge circuit (10) for discharging electrical current to ground (12); and
a plurality of primary discharge switching elements (16), each primary discharge switching element (16) for connection to a respective one of the plurality of power transmission media (2); and
a common electrical connection (14) that is electrically connected to the discharge circuit (10),
wherein each primary discharge switching element (16) is configured to be switchable to selectively connect and disconnect the respective power transmission medium (2) to and from the common electrical connection (14).

## Description

The invention relates to an electrical discharge system and a method of operating an electrical discharge system.

In high voltage direct current (HVDC) power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks.

The conversion between DC power and AC power is utilised where it is necessary to interconnect DC and AC networks. In any such power transmission network, converters (i.e. power converters) are required at each interface between AC and DC power to effect the required conversion from AC to DC or from DC to AC.

In cases where a power transmission medium is overloaded or where testing or maintenance of the power transmission medium is required, the power transmission medium needs to be discharged.

According to a first aspect of the invention, there is provided an electrical discharge system for discharging a plurality of power transmission media of a power transmission network, the electrical discharge system comprising:
a discharge circuit for discharging electrical current to ground; and
a plurality of primary discharge switching elements, each primary discharge switching element for connection to a respective one of the plurality of power transmission media; and
a common electrical connection that is electrically connected to the discharge circuit,
wherein each primary discharge switching element is configured to be switchable to selectively connect and disconnect the respective power transmission medium to and from the common electrical connection.

In a multiterminal DC power transmission network, multiple power transmission lines or cables are connected to a positive or negative DC terminal and each cable is dischargeable via a respective discharge device. Such multiple power transmission lines or cables may be found in a DC yard. This results in a large number of discharge devices which requires an extensive footprint, a large amount of auxiliary controls and several monitoring systems.

The electrical discharge system according to the present invention utilises a common electrical connection to electrically connect the plurality of power transmission media to the discharge circuit in order to advantageously reduce the number of discharge circuits required. This configuration additionally facilitates the expansion of the electrical discharge system, reduces the maintenance time and costs, reduces the usage of auxiliary controls and simplifies the monitoring of the electrical discharge system.

In a preferred embodiment of the invention, the common electrical connection may be a busbar. Being a busbar, the common electrical connection can be configured to have a more compact size, thereby further reducing the footprint of the electrical discharge system. In other embodiments, the common electrical connection may be any suitable type of electrical connection capable of simultaneous connection to multiple power transmission media.

In embodiments of the invention the discharge circuit may include a discharge resistor. The discharge circuit including a discharge resistor advantageously reduces the time required to discharge a selected power transmission medium or selected power transmission media.

In other embodiments of the invention the discharge circuit may include a secondary discharge switching element configured to be switchable to selectively connect and disconnect the discharge circuit to and from ground. The provision of a secondary discharge switching element advantageously provides greater control over the discharge of the plurality of power transmission media and, in particular, advantageously allows for confirmation of the electrical connection between a selected power transmission medium and the common electrical connection before the discharge circuit is connected to ground.

In embodiments of the invention the electrical discharge system may include a plurality of power transmission switching elements, wherein each power transmission switching element may be configured to be switchable to selectively connect and disconnect the respective power transmission medium to and from a positive or negative potential. The provision of a plurality of power transmission switching elements enables the control of the selective connection and disconnection of each power transmission medium to and from a positive or negative potential.

Preferably, each power transmission switching element may be configured to be switchable to selectively connect and disconnect the respective power transmission medium to and from a positive or negative busbar.

In a preferred embodiment of the invention each power transmission switching element may include one or more circuit interruption devices. The provision of circuit interruption devices, such as circuit breakers, isolators and disconnectors, increases the safety of the electrical discharge system by allowing for selective or automatic disconnection of the plurality of power transmission media from the positive or negative potentials or busbars, for example in the case that a power transmission medium is overloaded or requires maintenance.

In embodiments of the invention the electrical discharge system may include:
first and second discharge circuits for discharging electrical current to ground;
a first plurality of primary discharge switching elements and a second plurality of primary discharge switching elements, each primary discharge switching element for connection to a respective one of the plurality of power transmission media;
a first common electrical connection that is electrically connected to the first discharge circuit; and
a second common electrical connection that is electrically connected to the second discharge circuit,
wherein each one of the first plurality of primary discharge switching elements may be configured to be switchable to selectively connect and disconnect the respective power transmission medium to and from the first common electrical connection, and wherein each one of the second plurality of primary discharge switching elements may be configured to be switchable to selectively connect and disconnect the respective power transmission medium to and from the second common electrical connection.

The provision of first and second common electrical connections each connectable to a respective discharge circuit advantageously reduces the voltage that each primary discharge switching element needs to withstand compared to an electrical discharge system only having one common electrical connection. This reduces the insulation requirements, allowing for cheaper and more compact primary discharge switching elements.

Moreover, the provision of first and second common electrical connections each connectable to a respective plurality of power transmission media advantageously allows each common electrical connection to be operated independently.

In other embodiments of the invention the electrical discharge system may include:
a first plurality of primary discharge switching elements and a second plurality of primary discharge switching elements, each primary discharge switching element for connection to a respective one of the plurality of power transmission media;
a first common electrical connection that is electrically connected to the discharge circuit; and
a second common electrical connection that is electrically connected to the discharge circuit,
wherein each one of the first plurality of primary discharge switching elements may be configured to be switchable to selectively connect and disconnect the respective power transmission medium to and from the first common electrical connection, and wherein each one of the second plurality of primary discharge switching elements may be configured to be switchable to selectively connect and disconnect the respective power transmission medium to and from the second common electrical connection.

The provision of first and second common electrical connections connectable to a single discharge circuit advantageously reduces costs and the footprint of the electrical discharge system.

In a preferred embodiment of the invention the electrical discharge system may include a common electrical connection switching element configured to selectively connect and disconnect the common electrical connection to and from the discharge circuit. The provision of a common electrical connection switching element advantageously allows the electrical discharge system to better control the electrical connection between the common electrical connection and the discharge circuit.

The electrical discharge system may include first and second common electrical connection switching elements, wherein each of the first and second common electrical connection switching elements may be configured to selectively connect and disconnect the corresponding common electrical connection to and from the corresponding discharge circuit. The provision of first and second common electrical connection switching elements advantageously allows the electrical discharge system to control the electrical connection between each of the first and second common electrical connections and the discharge circuit while remaining compact in size.

According to a second aspect of the invention there is provided a power transmission network comprising a plurality of power transmission media; and an electrical discharge system according to any one of the first aspect of the invention and its embodiments. The power transmission network according to any one of the second aspect of the invention and its embodiments shares all the advantages described above in relation to the electrical discharge system. In a preferred embodiment the plurality of power transmission media is a plurality of cables such as overhead lines, under-sea cables and/or underground cables.

According to a third aspect of the invention there is provided a method of operating an electrical discharge system according to any one of the first aspect of the invention and its embodiments, the method comprising the step of switching each primary discharge switching element to selectively connect and disconnect the respective power transmission medium to and from the common electrical connection.

The method of the invention shares the benefits of the corresponding features of the electrical discharge system. In particular, this method advantageously allows for the efficient control over the discharge of a plurality of power transmission media using a compact electrical discharge system.

In a preferred embodiment the method may comprise the step of switching the secondary discharge switching element to selectively connect and disconnect the discharge circuit to and from ground. The provision of a step of controlling the secondary discharge switching element separate from the step of controlling the plurality of primary discharge switching elements increases safety by allowing confirmation of the electrical connection between a selected power transmission medium and the common electrical connection before the discharge circuit is connected to ground.

Preferably, the step of switching the secondary discharge switching element to selectively connect the discharge circuit to ground follows the step of switching each primary discharge switching element to selectively connect the respective power transmission medium to the common electrical connection. Preferably, the step of switching the secondary discharge switching element to selectively disconnect the discharge circuit from ground precedes the step of switching each primary discharge switching element to selectively disconnect the respective power transmission medium from the common electrical connection.

In further embodiments of the invention the method may comprise the step of switching the common electrical connection switching element to selectively connect and disconnect the common electrical connection to and from the discharge circuit. The provision of this step allows for a simplified way of controlling the connection between the discharge circuit and the plurality of power transmission media particularly in cases where the electrical discharge system comprises two common electrical connections or where the discharge circuit does not comprise a secondary discharge switching element.

Preferably, the step of switching the common electrical connection switching element to selectively connect the common electrical connection to the discharge circuit precedes the step of switching the secondary discharge switching element to selectively connect the discharge circuit to ground. Preferably, the step of switching the common electrical connection switching element to selectively disconnect the common electrical connection from the discharge circuit follows the step of switching the secondary discharge switching element to selectively disconnect the discharge circuit from ground.

In other embodiments of the invention the method may comprise the step of switching each power transmission switching element to selectively connect and disconnect the respective power transmission medium to and from the positive or negative potential. The positive or negative potential may be a positive or negative busbar.

Preferably, the step of switching each power transmission switching element to selectively disconnect the respective power transmission medium from the positive or negative potential precedes the step of switching each primary discharge switching element to selectively connect the respective power transmission medium to the common electrical connection. Preferably, the step of switching each power transmission switching element to selectively connect the respective power transmission medium to the positive or negative potential follows the step of switching each primary discharge switching element to selectively disconnect the respective power transmission medium from the common electrical connection.

It will be appreciated that the use of the terms "first" and "second", and the like, in this patent specification is merely intended to help distinguish between similar features, and is not intended to indicate the relative importance of one feature over another feature, unless otherwise specified. It will also be appreciated that any two features described as being electrically connected may be directly connected, i.e. with no other device arranged in electrical connection between the two features, or indirectly connected, i.e. with one or more devices arranged in electrical connection between the two features.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

There now follows a brief description of preferred embodiments of the invention, by way of non-limiting examples, with reference being made to the following figures in which:
Figure 1 shows a schematic view of a power transmission network comprising an electrical discharge system according to a first embodiment of the invention;
Figure 2 shows a schematic view of a power transmission network comprising an electrical discharge system according to a second embodiment of the invention;
Figure 3 shows a schematic view of a power transmission network comprising an electrical discharge system according to a third embodiment of the invention;
Figure 4 shows a schematic view of a power transmission network comprising an electrical discharge system according to a fourth embodiment of the invention;
Figure 5 shows the power transmission network of Figure 1 in normal operation to transmit power;
Figure 6 shows a first step of a method of operating the electrical discharge system of Figure 1 according to an embodiment of the invention;
Figure 7 shows a second step of the method of Figure 6;
Figure 8 shows a third step of the method of Figure 6;
Figure 9 shows a fourth step of the method of Figure 6;
Figure 10 shows a fifth step of the method of Figure 6; and
Figure 11 shows a sixth step of the method of Figure 6.

The figures are not necessarily to scale, and certain features and certain views of the figures may be shown exaggerated in scale or in schematic form in the interests of clarity and conciseness.

The following embodiments of the invention are described with reference to high voltage power transmission networks, but it will be appreciated that the following embodiments of the invention are applicable mutatis mutandis to power transmission networks operating at other voltage levels.

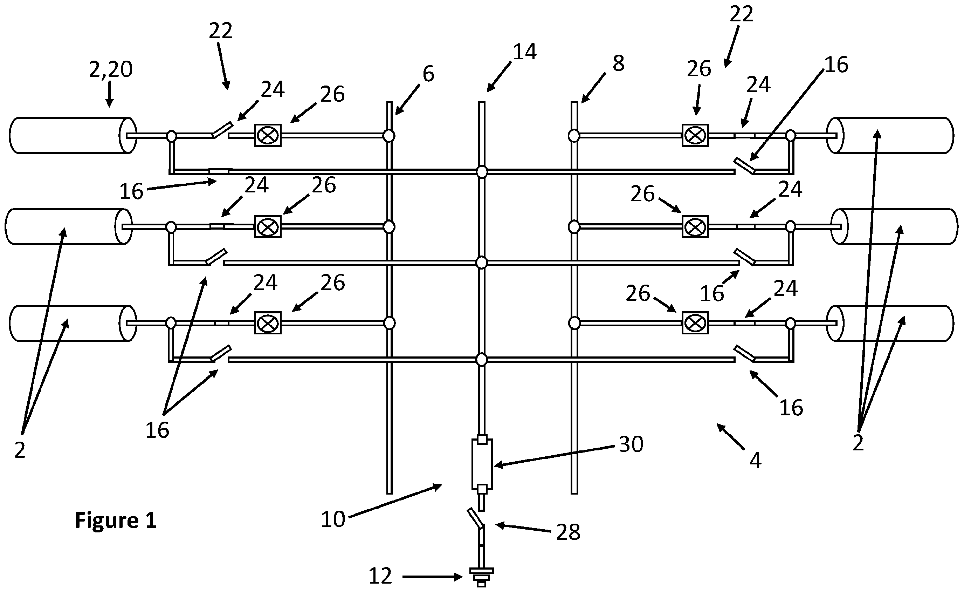

Figure 1 shows a power transmission network. The power transmission network comprises a plurality of power transmission media 2 and an electrical discharge system 4 according to a first embodiment of the invention.

Each one of the plurality of power transmission media 2 is preferably a power transmission line for transmitting high voltage (HV) DC power. In alternative embodiments each power transmission medium may be any other type of transmission medium suitable for transmitting HVDC power, such as a cable.

Each one of the plurality of power transmission media 2 is connectable to a positive or negative potential of the power transmission network, which are respectively shown in Figure 1 as a positive busbar 6 and a negative busbar 8. In other embodiments each power transmission medium may be connectable to a positive or negative potential of a power transmission network that may not be a busbar.

The electrical discharge system 4 comprises: a discharge circuit 10 for discharging electrical current to ground 12; and a common electrical connection 14 that is electrically connected to the discharge circuit 10. The common electrical connection 14 is shown in Figure 1 as a busbar but in other embodiments the common electrical connection may be any type of suitable electrical connection.

The electrical discharge system 4 further comprises a plurality of primary discharge switching elements 16. Each power transmission medium 2 is selectively connectable and disconnectable to and from the common electrical connection 14 via a respective primary discharge switching element 16 that can be selectively opened and closed. Each primary discharge switching element 16 may be or comprise any type of suitable switch, such as a disconnector.

In other embodiments a primary discharge switching element may be switchable to selectively connect and disconnect more than one power transmission medium to and from the common electrical connection.

The electrical discharge system 4 further comprises a plurality of power transmission switching elements 22. Each power transmission switching element 22 is configured to be switchable to selectively connect and disconnect the respective power transmission medium 2 to and from the positive or negative busbar 6, 8.

In the arrangement shown in Figure 1, the voltages at the positive and negative busbars 6, 8 are respectively +Vdc and -Vdc. Each primary discharge switching element 16 is therefore configured to withstand about 2 Vdc.

Each power transmission switching element 22 may be or comprise any type of suitable switch.

In the embodiment shown, each power transmission switching element 22 comprises a circuit interruption device 24 shown as a disconnector. Each power transmission switching element 22 further comprises a circuit interruption device 26 shown as a circuit breaker. Each pair of circuit interruption devices 24, 26 is configured to selectively or automatically interrupt the transmission of power between the positive or negative busbar 6, 8 and the respective power transmission medium 2. In other embodiments, each power transmission switching element 22 may not comprise a circuit interruption device or may comprise only one circuit interruption device. In further other embodiments, each power transmission switching element 22 may comprise a fast earth switch.

The discharge circuit 10 comprises a secondary discharge switching element 28 configured to be switchable to selectively connect and disconnect the discharge circuit 10 to and from ground 12. The secondary discharge switching element may be, for example, a fast earth switch or a conventional earth switch.

The discharge circuit 10 further comprises a discharge resistor 30 arranged in series between the common electrical connection 14 and the secondary discharge switching element 28. In other embodiments the discharge circuit may not comprise a discharge resistor or may comprise more than one discharge resistor. In further embodiments, the one or more discharge resistors may be arranged between the secondary discharge switching element and ground.

Each one of the plurality of primary discharge switching elements 16, the plurality of power transmission switching elements 22 and the secondary discharge switching element 28 are configured to be selectively controllable by at least one controller (not shown). The at least one controller may be integrated in the electrical discharge system or be separate from the electrical discharge system and configured to control the electrical discharge system remotely.

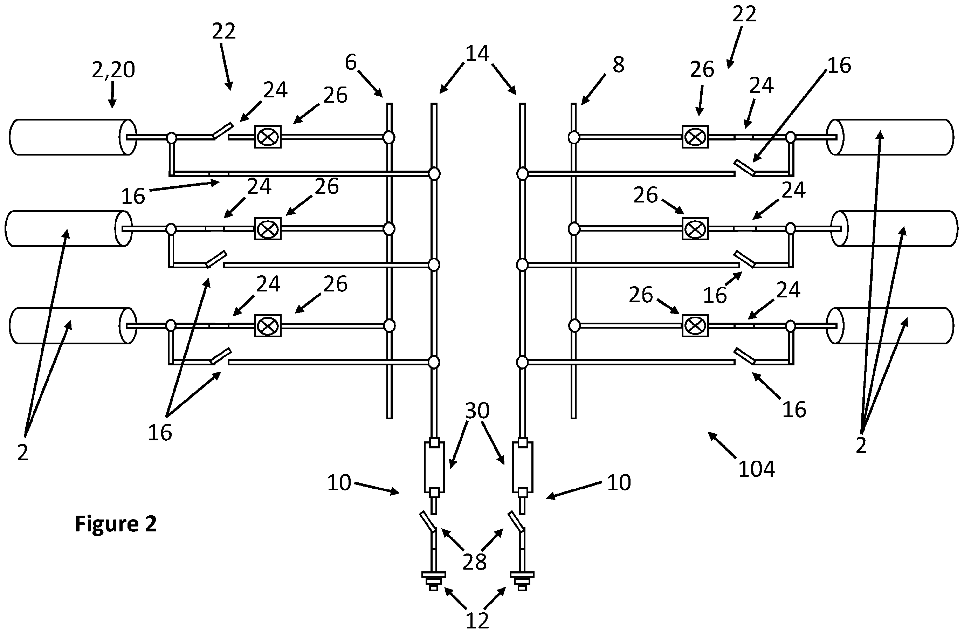

Figure 2 shows a power transmission network comprising an electrical discharge system 104 according to a second embodiment of the invention.

The electrical discharge system 104 shown in Figure 2 is identical to the one shown in Figure 1 except for a number of differences that will now be described. The electrical discharge system 104 comprises first and second discharge circuits 10 connected to first and second common electrical connections 14 respectively.

The electrical discharge system 104 comprises a first plurality of primary discharge switching elements 16 and a second plurality of primary discharge switching elements 16. Each one of the first plurality of primary discharge switching elements 16 is configured to be switchable to selectively connect and disconnect the respective power transmission medium 2 to and from the first common electrical connection 14, and each one of the second plurality of primary discharge switching elements 16 is configured to be switchable to selectively connect and disconnect the respective power transmission medium 2 to and from the second common electrical connection 14.

Each one of the first and second discharge circuits 10, similarly to the embodiment of Figure 1, comprises a discharge resistor 30 and a secondary discharge switching element 28.

In the arrangement shown in Figure 2, the voltages at the positive and negative busbars 6, 8 are respectively +Vdc and -Vdc similarly to the embodiment shown in Figure 1.

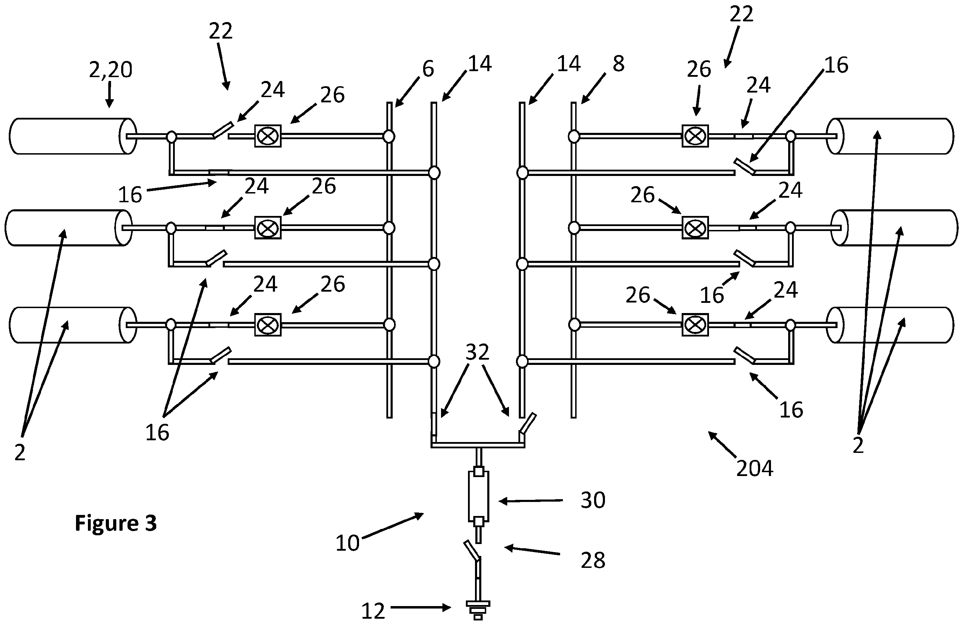

Figure 3 shows a power transmission network comprising an electrical discharge system 204 according to a third embodiment of the invention. The electrical discharge system 204 shown in Figure 3 is identical to the one shown in Figure 2 except for a number of differences that will now be described.

The electrical discharge system 204 comprises a single discharge circuit 10 similar to the one shown in Figure 1 having a discharge resistor 30 and a secondary discharge switching element 28. The electrical discharge system 204 further comprises first and second common electrical connection switching elements 32 configured to selectively connect and disconnect the discharge circuit 10 to the first common electrical connection 14 and the second common electrical connection 14 respectively. In other embodiments the electrical discharge system may further comprise a single common electrical connection switching element configured to selectively connect and disconnect the first and second common electrical connections to and from the discharge circuit.

In the arrangement shown in Figure 3, the voltage at the positive and negative busbars 6, 8 is respectively +Vdc and -Vdc similarly to the embodiments shown in Figures 1 and 2.

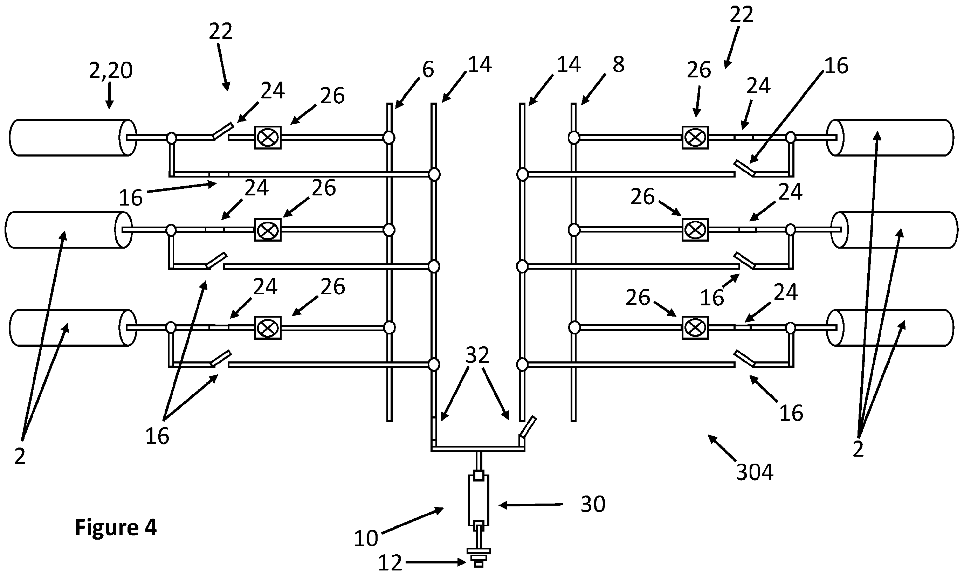

Figure 4 shows a power transmission network comprising an electrical discharge system 304 according to a fourth embodiment of the invention. The electrical discharge system 304 shown in Figure 4 is identical to the one shown in Figure 3 except that the electrical discharge system 4 does not comprise a secondary discharge switching element.

In other embodiments the discharge circuit of the electrical discharge system may not comprise a discharge resistor and/or may comprise a single common electrical connection switching element configured to selectively connect and disconnect the first and second common electrical connections to and from the discharge circuit.

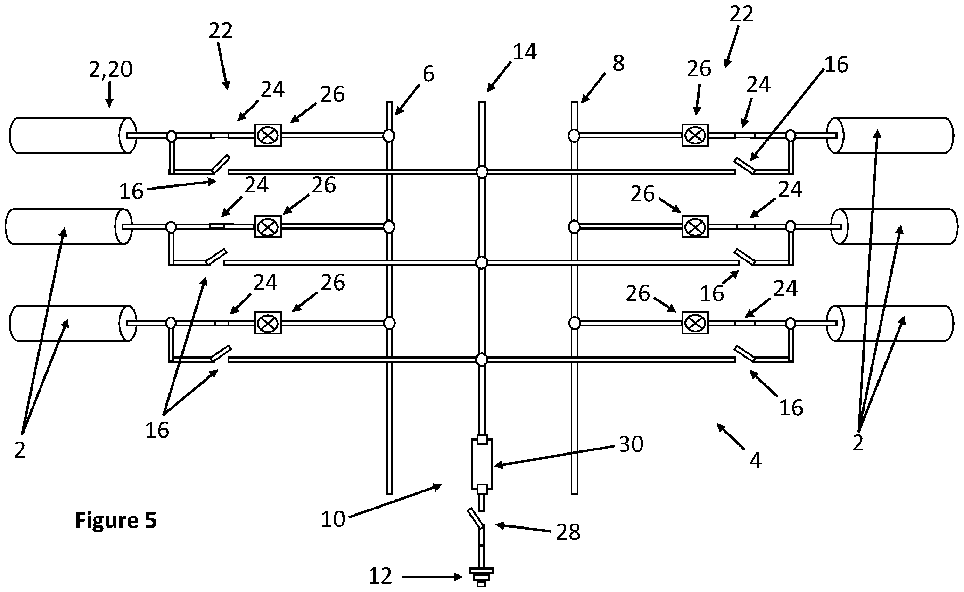

Figures 5 to 11 show a method of operating the electrical discharge system 4 shown in Figure 1 according to an embodiment of the invention.

Figure 5 more specifically shows the power transmission network of Figure 1 in normal operation to transmit power. The plurality of power transmission switching elements 22 are in a closed state and the plurality of primary discharge switching elements 16 are in an open state.

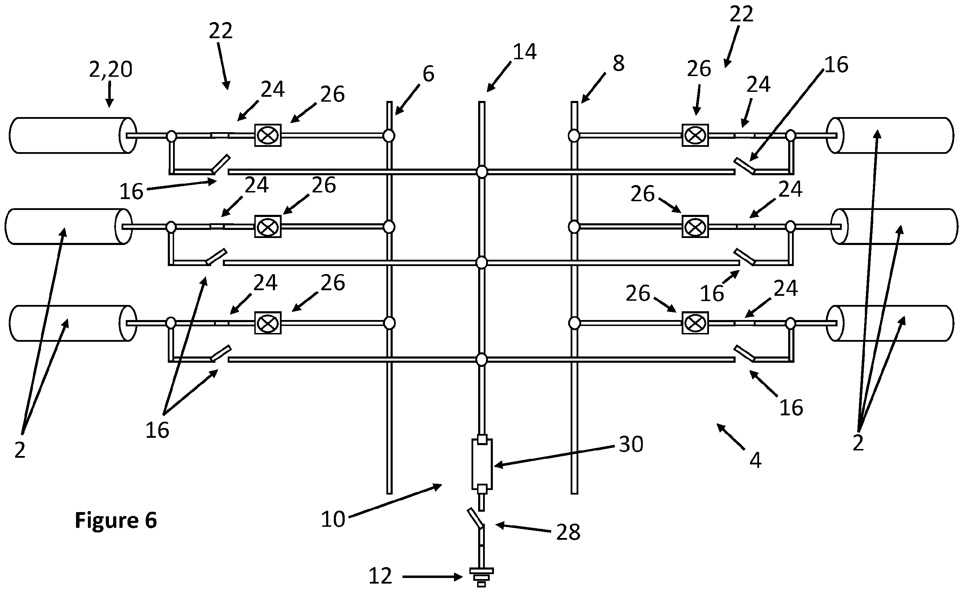

According to a first step, shown in Figure 6, the circuit interruption device 26 is switched to start the disconnection of a selected power transmission medium 2, 20 from the positive busbar 6. The remaining plurality of power transmission media 2 continues to transmit power while the selected power transmission medium 2, 20 is disconnected from the positive busbar 6.

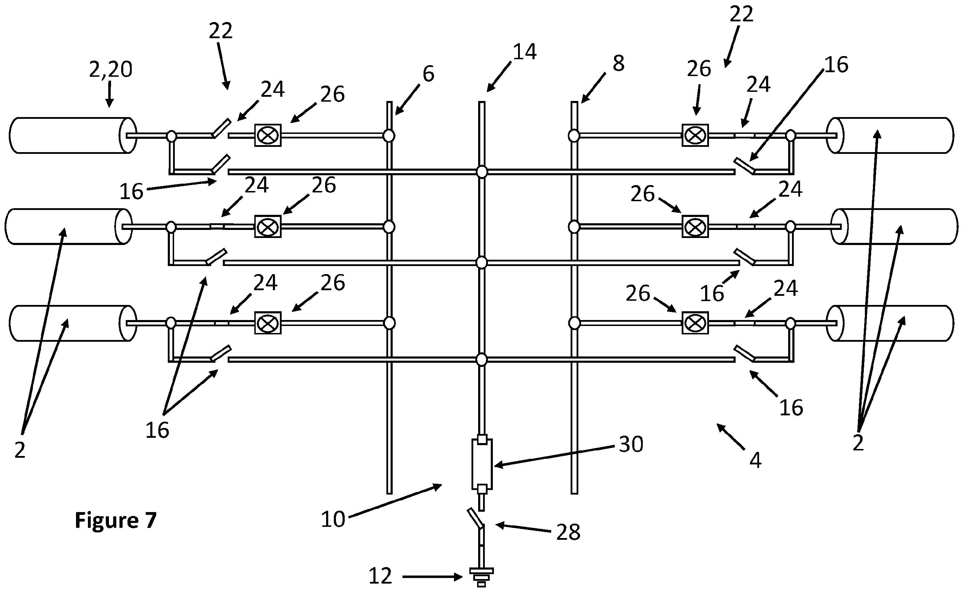

According to a second step, shown in Figure 7, the circuit interruption device 24 corresponding to the selected power transmission medium 2, 20 is switched to complete the disconnection of the power transmission medium 2, 20 from the positive busbar 6.

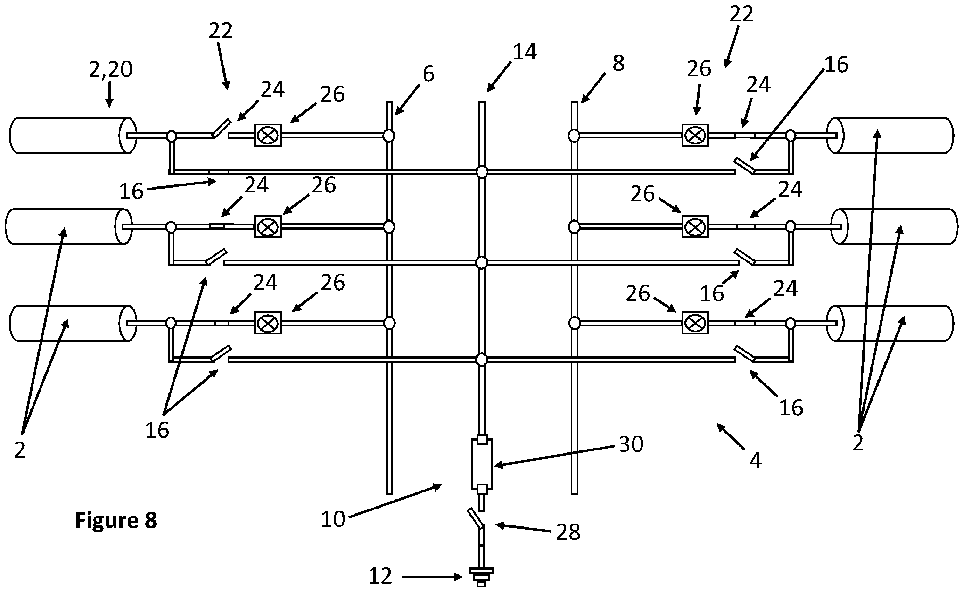

According to a third step, shown in Figure 8, the primary discharge switching element 16 corresponding to the selected power transmission medium 2, 20 is switched to selectively connect the selected power transmission medium 20 to the common electrical connection 14 and consequently connect the selected power transmission medium 20 to the discharge circuit 10.

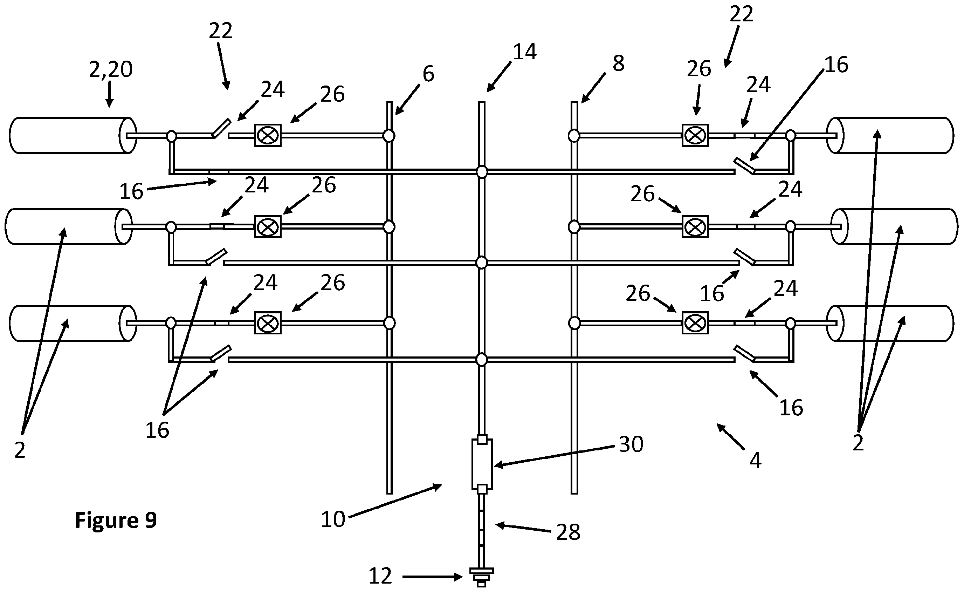

According to a fourth step, shown in Figure 9, the secondary discharge switching element 28 is switched to selectively connect the common electrical connection 14 to ground 12 via the discharge resistor 30. A connection therefore is made between the selected power transmission medium 2, 20 and ground 12 via the common electrical connection 14 and the discharge circuit 10. Charge stored in the selected power transmission medium 2, 20 therefore is discharged to ground 12 via the common electrical connection 14 and the discharge circuit 10.

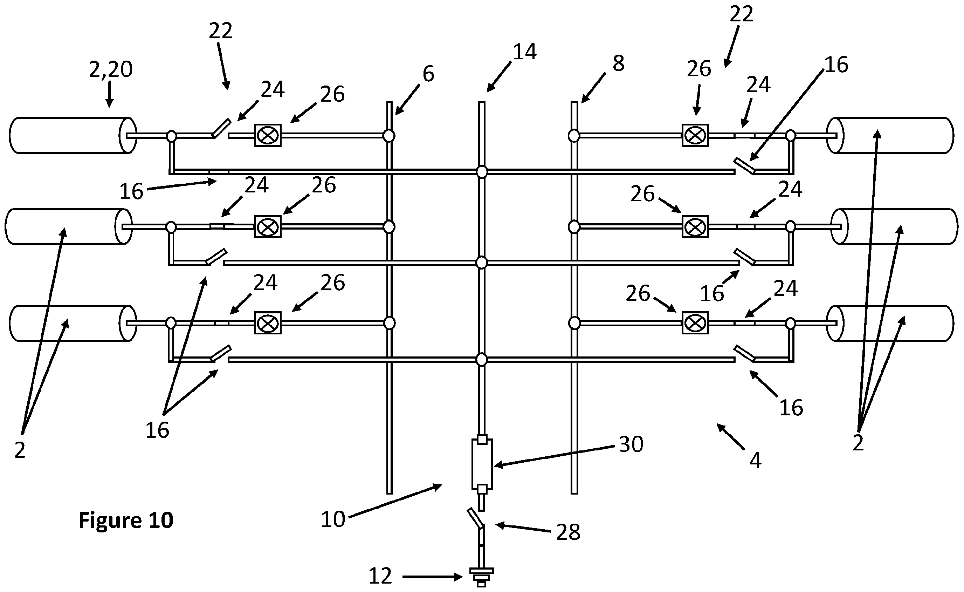

According to a fifth step, shown in Figure 10, the secondary discharge switching element 28 is switched to selectively disconnect the discharge circuit 10 from ground 12 after the discharging is completed.

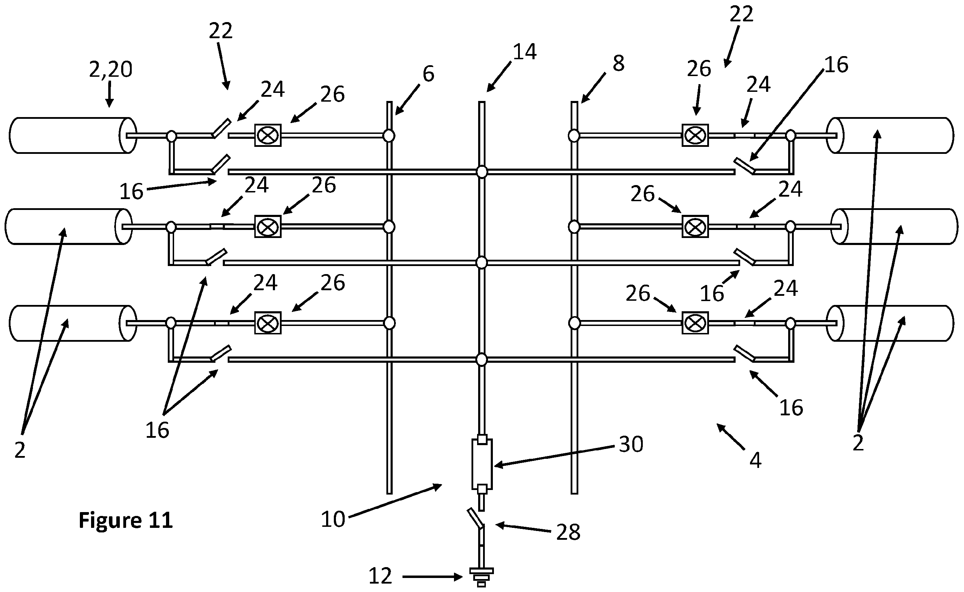

According to a sixth step, shown in Figure 11, the selected primary discharge switching element 16 is switched to selectively disconnect the selected power transmission medium 2, 20 from the common electrical connection 14 and consequently disconnect the selected power transmission medium 2, 20 from the discharge circuit 10.

The selected power transmission medium 20 is now discharged and can be handled safely. The selected power transmission medium 20 can now also be re-connected to the positive busbar 6 by closing the selected power transmission switching element 22 to selectively connect the power transmission medium 2, 20 to the positive busbar 6, including switching the circuit interruption devices 24, 26 to selectively connect the power transmission medium 2, 20 to the positive busbar 6.

Another power transmission medium 2 can be selected for discharging and the above steps can be repeated for that power transmission medium 2. It will be understood that the steps for discharging power transmission media 2 connected to the negative busbar 8 will be the same as the ones shown in relation to Figures 5 to 11.

In other embodiments the order of the above steps can be different or some of the above steps can be omitted.

Moreover, in alternative embodiments, the above steps may be carried out simultaneously for more than one power transmission medium connected to the same one of the positive and the negative busbars. The above steps may be carried out simultaneously for power transmission media connected to the positive and negative busbars, particularly in the case of the electrical discharge system according to the embodiment shown in Figure 2.

In the case of the electrical discharge system according to the embodiment shown in Figure 3, the method may further comprise:
i. the step of switching one of the first and second common electrical connection switching elements 32 to selectively connect the first or second common electrical connection 14 to the discharge circuit 10 after the step of switching the primary discharge switching element 16 to selectively connect the selected power transmission medium to the first or second common electrical connection 14; and
ii. the step of switching one of the first and second common electrical connection switching elements 32 to selectively disconnect the first or second common electrical connections 14 from the discharge circuit 10 before the step of switching the primary discharge switching element 16 to selectively disconnect the selected power transmission medium from the first or second common electrical connection 14.

In the case of the electrical discharge system according to the embodiment shown in Figure 4, the method may omit the steps relating to the switching of the secondary discharge switching element.

It will be appreciated that the above numerical values are merely intended to help illustrate the working of the invention and are not necessarily limiting on the scope of the invention.

The listing or discussion of an apparently prior-published document or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. An electrical discharge system (4) for discharging a plurality of power transmission media (2) of a power transmission network, the electrical discharge system (4) comprising:
a discharge circuit (10) for discharging electrical current to ground (12); and
a plurality of primary discharge switching elements (16), each primary discharge switching element (16) for connection to a respective one of the plurality of power transmission media (2); and
a common electrical connection (14) that is electrically connected to the discharge circuit (10),
wherein each primary discharge switching element (16) is configured to be switchable to selectively connect and disconnect the respective power transmission medium (2) to and from the common electrical connection (14).

2. An electrical discharge system (4) according to any one of the preceding claims wherein the common electrical connection (14) is a busbar.

3. An electrical discharge system (4) according to any one of the preceding claims wherein the discharge circuit (10) includes a discharge resistor (30).

4. An electrical discharge system (4) according to any one of the preceding claims wherein the discharge circuit (10) includes a secondary discharge switching element (28) configured to be switchable to selectively connect and disconnect the discharge circuit (10) to and from ground (12).

5. An electrical discharge system (4) according to any one of the preceding claims including a plurality of power transmission switching elements (22), wherein each power transmission switching element (22) is configured to be switchable to selectively connect and disconnect the respective power transmission medium (2) to and from a positive or negative potential (6, 8).

6. An electrical discharge system (4) according to Claim 5 wherein each power transmission switching element (22) is configured to be switchable to selectively connect and disconnect the respective power transmission medium (2) to and from a positive or negative busbar (6, 8).

7. An electrical discharge system (4) according to Claim 5 or Claim 6 wherein each power transmission switching element (22) includes one or more circuit interruption devices (24, 26).

8. An electrical discharge system (4) according to any one of the preceding claims including:
first and second discharge circuits (10) for discharging electrical current to ground (12);
a first plurality of primary discharge switching elements (16) and a second plurality of primary discharge switching elements (16), each primary discharge switching element (16) for connection to a respective one of the plurality of power transmission media (2);
a first common electrical connection (14) that is electrically connected to the first discharge circuit (10); and
a second common electrical connection (14) that is electrically connected to the second discharge circuit (10),
wherein each one of the first plurality of primary discharge switching elements (16) is configured to be switchable to selectively connect and disconnect the respective power transmission medium (2) to and from the first common electrical connection (14), and wherein each one of the second plurality of primary discharge switching elements (16) is configured to be switchable to selectively connect and disconnect the respective power transmission medium (2) to and from the second common electrical connection (14).

9. An electrical discharge system (4) according to any one of Claims 1 to 7 including:
a first plurality of primary discharge switching elements (16) and a second plurality of primary discharge switching elements (16), each primary discharge switching element (16) for connection to a respective one of the plurality of power transmission media (2);
a first common electrical connection (14) that is electrically connected to the discharge circuit (10); and
a second common electrical connection (14) that is electrically connected to the discharge circuit (10),
wherein each one of the first plurality of primary discharge switching elements (16) is configured to be switchable to selectively connect and disconnect the respective power transmission medium (2) to and from the first common electrical connection (14), and wherein each one of the second plurality of primary discharge switching elements (16) is configured to be switchable to selectively connect and disconnect the respective power transmission medium (2) to and from the second common electrical connection (14).

10. An electrical discharge system (4) according to any one of the preceding claims including a common electrical connection switching element (32) configured to selectively connect and disconnect the common electrical connection (14) to and from the discharge circuit (10).

11. An electrical discharge system (4) according to Claim 10 when dependent from either Claim 8 or Claim 9, wherein the electrical discharge system (4) includes first and second common electrical connection switching elements (32), wherein each of the first and second common electrical connection switching elements (32) is configured to selectively connect and disconnect the corresponding common electrical connection (14) to and from the corresponding discharge circuit (10).

12. A power transmission network comprising: a plurality of power transmission media (2); and an electrical discharge system (4) according to any one of the preceding claims.

13. A method of operating an electrical discharge system (4) according to any one of Claims 1 to 11, the method comprising the step of switching each primary discharge switching element (16) to selectively connect and disconnect the respective power transmission medium (2) to and from the common electrical connection (14).

14. A method according to Claim 13 when dependent from Claim 4, the method comprising the step of switching the secondary discharge switching element (28) to selectively connect and disconnect the discharge circuit (10) to and from ground (12).

15. A method according to Claim 13 or Claim 14 when either claim is dependent from Claim 10, the method comprising the step of switching the common electrical connection switching element (32) to selectively connect and disconnect the common electrical connection (14) to and from the discharge circuit (10).
